Europäisches Patentamt

European Patent Office

Office européen des brevets

(19)

(11) **EP 1 272 746 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(21) Anmeldenummer: **01940137.1**

(22) Anmeldetag: **10.04.2001**

(51) Int Cl.⁷: **F01N 11/00**, F02D 41/02

(86) Internationale Anmeldenummer:
**PCT/DE2001/001395**

(87) Internationale Veröffentlichungsnummer:
**WO 2001/077503 (18.10.2001 Gazette 2001/42)**

(54) **VERFAHREN ZUR DIAGNOSE EINER ABGASREINIGUNGSANLAGE EINER LAMBDAGEREGELTEN BRENNKRAFTMASCHINE**

METHOD FOR DIAGNOSING AN EXHAUST GAS CLEANING SYSTEM OF A LAMBDA-CONTROLLED INTERNAL COMBUSTION ENGINE

PROCEDE POUR EFFECTUER LE DIAGNOSTIC D'UNE UNITE D'EPURATION DE GAZ D'ECHAPPEMENT D'UN MOTEUR A COMBUSTION INTERNE A REGULATION LAMBDA

(84) Benannte Vertragsstaaten:
**DE FR IT SE**

(30) Priorität: **11.04.2000 DE 10017931**

(43) Veröffentlichungstag der Anmeldung:
**08.01.2003 Patentblatt 2003/02**

(73) Patentinhaber: **SIEMENS AKTIENGESELLSCHAFT
80333 München (DE)**

(72) Erfinder:
- **RÖSEL, Gerd
  93055 Regensburg (DE)**
- **ZHANG, Hong
  93105 Tegernheim (DE)**

(56) Entgegenhaltungen:
**DE-A- 3 500 594        DE-A- 4 211 116
DE-A- 19 752 965        US-A- 5 158 059**

- **PATENT ABSTRACTS OF JAPAN vol. 2000, no. 04, 31. August 2000 (2000-08-31) & JP 2000 027688 A (MAZDA MOTOR CORP), 25. Januar 2000 (2000-01-25)**

## Beschreibung

Die Erfindung bezieht sich auf ein Verfahren zur Diagnose einer Abgasreinigungsanlage im Abgastrakt einer lambdageregelten Brennkraftmaschine mit einem 3-Wege-Katalysator, einer dem Katalysator vorgeschalteten binären Vorkat-Lambdasonde und einer dem Katalysator nachgeschalteten Nachkat-Lambdasonde, bei welchem Verfahren die Brennkraftmaschine in der Lambdaregelung so betrieben wird, daß das Kraftstoff-Luftverhältnis des der Brennkraftmaschine zugeführten Gemisches und damit das Signal der Vorkat-Lambdasonde eine bestimmte, periodische Schwingung um Lambda = 1 herum ausführt, wobei das Signal der Nachkat-Lambdasonde ebenfalls eine Schwingung ausführt, und ein Defekt der Abgasreinigungsanlage diagnostiziert wird, wenn das Schwingungsverhalten des Signals der Nachkat-Lambdasonde außerhalb eines Sollbereiches liegt.

Bei einer Abgasreinigungsanlage mit zwei Lambdasonden wird eine Vorkat-Lambdasonde stromauf des Katalysators als Meßsonde verwendet. Eine Nachkat-Lambdasonde stromab des Katalysators dient als Monitorsonde dazu, eine Veränderung der statischen oder dynamischen Eigenschaften der Vorkat-Lambdasonde, die zu einer Emissionserhöhung führen würde, zu überwachen und auszugleichen. Üblicherweise haben beide Lambdasonden Zweipunktverhalten, und ihr abgegebenes Spannungssignal ist abhängig von dem im Abgas enthaltenen Sauerstoffanteil. Der Sauerstoffanteil im Abgas wiederum hängt vom Gemisch ab, das der Brennkraftmaschine zugeführt wurde. Bei magerem Gemisch (Lambda > 1) beträgt die Ausgangsspannung einer binären Lambdasonde üblicherweise unter 100 mV, ändert sich im Bereich Lambda = 1 fast sprunghaft und erreicht bei fettem Gemisch (Lambda < 1) über 0,7 V; dies wird als Zweipunktverhalten bezeichnet.

Die dynamischen und statischen Eigenschaften der Vorkat-Lambdasonde werden durch Sondenalterung und Vergiftung verändert. Dadurch wird die Regellage der Lambdaregelung verschoben. Zum Beispiel kann eine Phosphorvergiftung zu einer unsymmetrischen Veränderung der Sondenansprechzeit und somit zu einer Magerverschiebung der Sondenregelung aus dem optimalen Lambdabereiches für die katalytische Umwandlung heraus führen. Dadurch kann z.B. die $NO_x$-Emission über eine erlaubte Grenze steigen. Die Nachkat-Lambdasonde wird als Monitorsonde zur Überwachung der katalytischen Umwandlung eingesetzt und für die Feinregulierung des Gemisches verwendet, um den für die Konvertierung günstigsten Lambdawert immer einhalten zu können. Dabei nützt man aus, daß das Zweipunktverhalten der Nachkat-Lambdasonde durch die auch dämpfend wirkende Konvertierungsfähigkeit des Katalysators in einem stark begrenzten Lambda-Bereich annähernd in ein lineares Verhalten übergeht. Dieses üblicherweise als Trimm- oder Führungsregelung bezeichnete Verfahren ist beispielsweise aus der DE 35 00 594 C2 bekannt. Die DE 197 52 965 A1 beschreibt eine Diagnosemöglichkeit für eine solche Abgasanlage. Dabei wird ein Versagen der Vorkat-Lambdasonde detektiert und eine dadurch bewirkte Schadstoffemissionserhöhung ermittelt. Das Verfahren benötigt eine Breitband-Lambdasonde stromauf des Katalysators.

Die US 5,158,059 offenbart ein Verfahren zur Diagnose eines Katalysators einer Brennkraftmaschine mit einer Vorkat-Lambdasonde und einer Nachkat-Lambdasonde, bei der während eines vorbestimmten stabilen Betriebszustandes die Kraftstoff-Einspritzdauer einer Perturbation unterzogen wird, bei welcher ein Korrekturfaktor zur Berechnung der Einspritzdauer eine Rechteckfunktion annimmt. Daraufhin werden die mit der gleichen Periode oszillierenden Signale der Vorkat-Lambdasonde und der Nachkat-Lambdasonde integriert, gewichtet und miteinander verglichen. Ist der Unterschied zwischen den beiden Integralen nicht größer als ein vorbestimmter Sollwert, wird entschieden, dass der Katalysator intakt ist.

Die DE 197 52 965 A1 beschreibt eine Diagnosemöglichkeit für eine solche Abgasanlage. Dabei wird ein Versagen der Vorkat-Lambdasonde detektiert und eine dadurch bewirkte Schadstoffemissionserhöhung ermittelt. Das Verfahren benötigt eine Breitband-Lambdasonde stromaus des Katalysators.

Im Stand der Technik sind weitere Verfahren zur Diagnose oder Überprüfung eines Katalysators bekannt, beispielsweise aus DE 41 28 823 A1, die das Sauerstoffspeichervermögen eines 3-Wege-Katalysators bestimmt, indem die Zeitdauer erfaßt wird, die zum Leeren oder Füllen des Katalysators mit Sauerstoff nötig wird, und aus dieser Zeitdauer die Sauerstoffmenge berechnet wird. Für dieses Verfahren ist vor dem Katalysator eine Lambda-Sonde mit Breitbandverhalten, d. h. deren Signal sich proportional zum Lambdawert ändert, unabdingbar.

Die bekannten Verfahren haben jedoch den Nachteil, daß bei einer defekten Vorkat-Lambdasonde oftmals ein defekter Katalysator diagnostiziert wird, obwohl noch keine unzulässigen Emissionen ausgestoßen werden. Eine Unterscheidung zwischen Katalysatordefekt und Vorkat-Lambdasondenversagen ist nach dem Stand der Technik nicht möglich. Darüber hinaus führt die große Sauerstoff-Be-/Entladung, die nach dem Stand der Technik zur Diagnose nötig ist, oftmals auch zu einer unerwünschten Schadstoffemission, da der Katalysator dann nicht mehr in seinem optimalen Bereich betrieben wird.

Schließlich sind Breitband-Lambdasonden relativ teuer. Verfahren die auf günstigeren, binären Lambdasonden, d.h. Lambdasonden mit Zweipunktverhalten, aufsetzen, sind bislang hinsichtlich ihrer Diagnosefähigkeit jedoch nicht vergleichbar.

Es ist Aufgabe der vorliegenden Erfindung, ein Verfahren zur Diagnose einer Abgasreinigungsanlage einer lambdageregelten Brennkraftmaschine anzugeben, das nicht zwingend den Einsatz einer Breitband-Lambdasonde benötigt und eine Erkennung eines Katalysatorversagens ermöglicht.

Diese Aufgabe wird erfindungsgemäß durch das in Anspruch 1 definierte Verfahren gelöst, bei dem in der Lambdaregelung zur Diagnose die Schwingung des Kraftstoff-Luftverhältnisses und damit des Signals einer binären Vorkat-Lambdasonde so beeinflußt wird, daß eine bestimmte, periodisch mit der Schwingung wechselnde Beladung des Katalysators eingestellt wird, wobei diese Beladung größer ist, als die normale Betriebsbeladung,

Zur Diagnose der Abgasreinigungsanlage wird die Sauerstoffspeicherfähigkeit des Katalysators herangezogen, die ein Maß für dessen Konvertierungsverhalten ist. Dabei wird der Katalysator einer Belastung unterzogen, die durch Oszillation des Kraftstoff-Luftverhältnisses um den stöchiometrischen Punkt herum hervorgerufen wird und die größer als die bei normaler binärer Lambdaregelung auftretende Betriebsbelastung ist. Allerdings wird eine gewisse maximale Katalysatorbelastung nicht überschritten. Die Belastung wird durch Beeinflussung der Schwingung des Kraftstoff-Luftverhältnisses und damit des Signals der Vorkat-Lambdasonde vorgegeben. Zur Diagnose wird das Schwingungsverhalten des Signals der Nachkat-Lambdasonde ausgewertet. Je nach Sauerstoffspeicherkapazität des Katalysators wird die wechselnde Belastung mehr oder weniger gut im Katalysator adsorbiert. Die Schwingung des Signals der Nachkat-Lambdasonde ist also abhängig von der Sauerstoffspeicherkapazität des Katalysators unterschiedlich groß. Durch Messungen an einem Katalysator, der gerade nicht mehr die vorgegebene Sauerstoffspeicherfähigkeit, mithin die Sollkonvertierungsfähigkeiten hat, kann man einen Sollbereich für das Schwingungsverhalten des Signals der Nachkat-Lambdasonde bestimmen. Ein solcher Katalysator wird üblicherweise als Grenz-Katalysator bezeichnet. Ist die Schwingung stärker, d.h. sind Amplitude oder eingeschlossene Fläche größer, ist der diagnostizierte Katalysator schlechter als der Grenz-Katalysator.

Die Beladung des Katalysators wird dadurch eingestellt, daß die Oszillation des Kraftstoff-Luftverhältnisses so gesteuert wird, daß die Schwingung des Signals der Vorkat-Lambdasonde eine gewisse Mindestfläche einschließt. Die dabei in einer Halbperiode der Schwingung in den Katalysator eingetragene Sauerstoffmasse mO2 kann man nach folgender Gleichung berechnen:

$$mO2 = 21\% \cdot MAF \cdot T1/2 \cdot (Lambda-1) / Lambda$$

wobei MAF der angesaugte Frischgasmassenstrom ist. mO2 ist die Sauerstoffmasse, die dem Katalysator während der Halbperiode der Lambdaregelung zugeführt wird, in der das Gemisch mager ist. Durch Variation der Halbperiodendauer T1/2 kann man also die Katalysatorbeladung, d.h. die in den Katalysator eingetragene Sauerstoffmenge einstellen. Durch entsprechende Variation der anderen (fetten) Halbperiodendauer kann man die Katalysatorbelastung variieren und dennoch das Gemisch im Mittel stöchiometrisch halten. Die Begriffe "Beladung" und "Belastung" werden deshalb austauschbar verwendet.

In einer bevorzugten Ausführungsform der Erfindung wird bei einer binären Lamdaregelung die P-Sprung-Verzögerungszeit eingestellt, wodurch sich T1/2 ändert. Um sicherzustellen, daß die Brennkraftmaschine dennoch in Mittel mit stöchiometrischen Gemisch versorgt wird, muß man die P-Sprung-Verzögerungszeit sowohl für den Sprung von mager nach fett als auch für den Sprung von fett nach mager gleichsinnig variieren. Die derart vorgegebene Katalysatorbelastung kann man dabei an den zu überprüfenden Emissionsgrenzwerten orientieren.

Die Vorgabe der Beladung hat den Vorteil, daß sie wesentlich unempfindlicher gegenüber Last-Drehzahl-Variationen ist, als bekannte Verfahren. Insbesondere bei geringen Lasten oder Drehzahlen ist immer noch eine gute Diagnose des Katalysators möglich.

Die Trimmregelung wirkt ebenfalls auf die P-Sprung-Verzögerungszeit, jedoch nur auf die Verzögerungszeit für einen Sprung, entweder von mager nach fett oder von fett nach mager. Durch diese ungleichsinnige oder einseitige Veränderung der P-Sprung-Verzögerungszeit, gleicht die Trimmregelung altersbedingte Veränderungen der Vorkat-Lambdasonde aus. Solche Veränderungen führen in der Regel zu einer Verschiebung des Lambda = 1 Arbeitspunktes der Sonde. Stellt man fest, daß sich eine oder beide Halbperiodendauern nicht wie gewünscht vergrößern lassen, da die zulässige P-Sprung-Verzögerungszeit entweder für den mager nach fett Sprung oder für den fett nach mager Sprung überschritten würde, und die Diagnose durch die Überwachung des Signals der Nachkat-Lambdasonde wegen einer unzulässigen Schwingung des Signals der Nachkat-Lambdasonde dennoch eine fehlerhafte Abgasreinigungsanlage anzeigt, so ist die Vorkat-Lambdasonde defekt. In einem solchen Fall hat die Trimmregelung bis zum maximal zulässigen Maß einen Fehler der Vorkat-Lambdasonde ausgeglichen. Die unzulässige Schwingung des Signals der Nachkat-Lambdasonde bei der Diagnose der Abgasreinigungsanlage ist dann deshalb aller Wahrscheinlichkeit nach auf eine defekte Vorkat-Lambdasonde zurückzuführen.

Die Auswertung des Signals der Nachkat-Lambdasonde erfolgt vorzugsweise dadurch, daß die von der Schwingung dieses Signals eingeschlossene Fläche bestimmt wird. Maßgeblich für das Sollverhalten der Schwingung ist die von der Oszillation des Kraftstoff-Luftverhältnisses und mithin von der Schwingung des Signals der Vorkat-Lambdasonde vorgegebene Periode. Deshalb kann die Fläche, die von der Schwingung des Signals der Nachkat-Lambdasonde eingeschlossen wird, besonders einfach dadurch ermittelt werden, indem über eine Periode der Schwingung des Signals der Vorkat-Lambdasonde der Betrag der Abweichung vom Mittelwert des Signals der Nachkat-Lambdasonde aufintegriert oder -summiert wird. Durch diese periodensynchrone Integration entfällt die Periodenbestimmung am Signal der Nachkat-Lambdasonde.

Aus diesem die Fläche beschreibenden Integral bzw. Summe kann man einen die Sauerstoffspeicherfähigkeit des Katalysators kennzeichnenden Wert gewinnen. Es ist möglich diesen Wert mit Betriebsparameter wie Drehzahl und Last noch weiter zu einer Emissionszahl zu wichten, so daß die Diagnose abhängig von der Überschreitung eines Emissionsgrenzwertes gemacht werden kann.

Weiter wird man vorzugsweise die Diagnose dann aussetzen, wenn die Lambdaregelung eine gewisse Regelabweichung zeigt. In einem solchen Fall würde beispielsweise eine Belastung durch Variation der P-Sprung-Verzögerungszeit eine unzulässige Emissionserhöhung bewirken.

Vorteilhafte Weiterbildungen der Erfindung sind Gegenstand der Unteransprüche.

Im folgenden werden Ausführungsbeispiele des erfindungsgemäßen Verfahrens anhand der Zeichnung näher beschrieben. Die Zeichnung zeigt:

Fig. 1    eine schematische Darstellung einer Brennkraftmaschine zur Ausführung des erfindungsgemäßen Verfahrens,

Fig. 2    ein Blockschaltbild eines schematisierten Verfahrensablaufes,

Fig. 3    Zeitreihen der Signale der Vorkat-Lambdasonde und der Nachkat-Lambdasonde und

Fig. 4    die Auftragung eines Diagnosewertes über der gespeicherten Sauerstoffmenge für zwei verschiedene Katalysatoren.

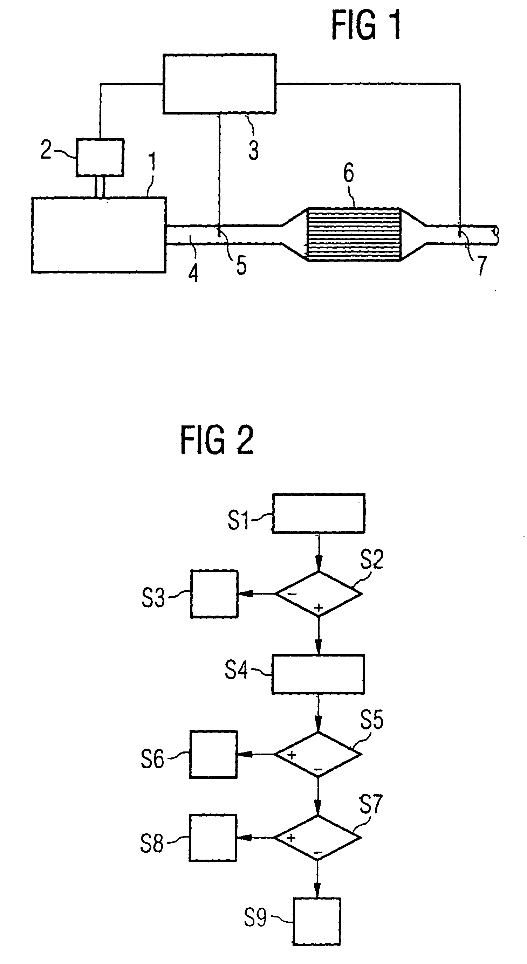

In Fig. 1 ist eine Brennkraftmaschine 1 mit einem Kraftstoffzufuhrsystem 2 und einem Steuergerät 3 dargestellt. Das Kraftstoffzufuhrsystem 2 wird über nicht näher bezeichnete Leitungen vom Steuergerät 3 angesteuert und sorgt für die Kraftstoffzuteilung der Brennkraftmaschine 1. In deren Abgastrakt 4 befindet sich ein lambdageregelter Katalysator 6. Zum Durchführen der Lamdaregelung ist stromauf des Katalysators 6 eine Vorkat-Lambdasonde 5 und stromab des Katalysators eine Nachkat-Lambdasonde 7 zum Messen des Lambdawertes vorgesehen. Beide Lambdasonden haben Zweipunktverhalten und liefern ihre Meßwerte über nicht näher bezeichnete Leitungen an das Steuergerät 3. Es werden dem Steuergerät 3 noch die Werte weiterer Sensoren, insbesondere der Drehzahl, der Last, der Katalysatortemperatur usw. zugeführt. Mit Hilfe dieser Werte steuert das Steuergerät 3 den Betrieb der Brennkraftmaschine 1.

Im Betrieb der Brennkraftmaschine 1 erfolgt die Steuerung der katalytischen Abgasbehandlung im Abgastrakt 4 mit Hilfe des Katalysators 6 wie folgt: Die Kraftstoffzufuhr im Kraftstoffzufuhrsystem 2 wird so gesteuert, daß das Signal der Vorkat-Lambdasonde 5 eine Schwingung um Lambda = 1 ausführt. Bei einer normalen, voll funktionsfähigen Lambdasonde entspricht ein Spannungspegel von 450 mV dem Wert Lambda = 1. Das Signal der Vorkat-Lambdasonde 5 schwingt um diesen Wert, so daß der Katalysator 6 im Mittel Abgas mit dem Wert Lambda = 1 zugeführt bekommt.

Die Nachkat-Lambdasonde 7 mißt den Lambdawert im behandelten Abgas stromab des Katalysators 6. Ihr Meßwert wird vom Steuergerät 3 dazu verwendet, eine Trimmregelung zu bewerkstelligen. D.h. der Meßwert der Nachkat-Lambdasonde 7 wird dazu verwendet, den Mittelwert der Schwingung der Vorkat-Lambdasonde 5 feinzujustieren. Durch diese Trimmregelung mit Hilfe der Nachkat-Lambdasonde 7 kann eine Langzeitdrift der Vorkat-Lambdasonde 5 ausgeglichen werden. Verschiebt sich der dem Wert Lambda = 1 entsprechende Signalpegel der Vorkat-Lambdasonde 5, führt das nicht zu einer Verschlechterung der Abgasbehandlung im Katalysator 6, da die Trimmregelung mit Hilfe der Nachkat-Lambdasonde 7 diese Verschiebung mißt und das Steuergerät 3 dazu veranlaßt, sie auszugleichen. Dies geschieht dadurch, daß die P-Sprung-Verzögerungszeit der Lambdaregelung einseitig verändert wird. Das Signal Vorkat-Lambdasonde zeigt somit eine asymmetrische Schwingung, deren magere Halbperiode sich in ihrer Dauer von der fetten Halbperiode unterscheidet. Da damit aber nur ein geändertes Ansprechverhalten der Vorkat-Lambdasonde 5 ausgeglichen wird, ist die Oszillation des Kraftstoff-Luftverhältnisses, mit dem die Brennkraftmaschine 1 über das Kraftstoffzuführsystem 2 versorgt wird, dennoch um Lambda = 1 herum angeordnet.

Zur Diagnose der Abgasreinigungsanlage wird das in Fig. 2 als Blockschaltbild dargestellte Verfahren verwendet. Dabei bezeichnen die mit S beginnenden Bezugszeichen die jeweiligen Schritte der Verfahrens.

Im Schritt S1 wird zuerst die Fläche bestimmt, die die Schwingung des Sondensignals der Nachkat-Lambdasonde in der abgelaufenen Periode einschloß. Dies erfolgt auf Basis der Lambdaregelparameter, also betriebspunktabhängig. Dann wird ein Vergrößerungswert für die P-Sprung-Verzögerungszeit berechnet, mit dem die Fläche für die nächste Periode einen bestimmten, für die Diagnose der Abgasreinigungsanlage erforderlichen Sollwert erreicht. Nun wird die P-Sprung-Verzögerungszeit der Lambda-Regelung um den Vergrößerungswert verändert, so daß die Schwingung des Signals der Vorkat-Lambdasonde die Sollwert-Fläche einschließt. Die Veränderung der P-Sprung-Verzögerungszeit bewirkt damit eine Veränderung der Halbperiodendauer T1/2, die sich nach folgender Gleichung auf die dem Katalysator zugeführte Sauerstoffmasse m02 auswirkt:

$$mO2 = 21\% \cdot MAF \cdot T1/2 \cdot (Lambda-1) /Lambda$$

wobei MAF der angesaugte Frischgasmassenstrom ist. Die einzustellende Sauerstoffmasse mO2 ist also über obige Gleichung direkt mit der Halbperiodendauer und damit der P-Sprung-Verzögerungszeit, die an der Lambdaregelung gestellt wird, verknüpft.

Die P-Sprung-Verzögerungszeit wird für den mager nach fett und für den fett nach mager Sprung gleichsinnig geändert, so daß sowohl die Periodendauer T1/2, in der die Brennkraftmaschine mit magerem Gemisch versorgt wird, als auch die Periodendauer T1/2, in der die Brennkraftmaschine mit fettem Gemisch versorgt wird, verlängert wird. Zur Wahl der Veränderung der P-Sprung-Verzögerungszeit wird also von der einzustellenden Sollwert-Fläche betriebspunktabhängig ausgegangen, die mit der Sauerstoffmasse mO2 verknüpft ist, so daß eine Überprüfung auf einen bestimmten Emissionsgrenzwert hin erfolgt. Auf diesen Sachverhalt, nach welchen Gesichtspunkten die Sauerstoffmasse mO2 zu wählen ist, wird später noch eingegangen.

In Schritt S2 wird geprüft, ob die Änderung der P-Sprung-Verzögerungszeit mit einer Verlängerung verbunden ist. Ist dies nicht der Fall ("-"-Verzweigung), wird in Schritt S3 eine Vorkat-Lambdasondenmarkierung gesetzt. Ansonsten wird direkt ("+"-Verzweigung) mit Schritt S4 fortgefahren. Führt die Änderung der P-Sprung-Verzögerungszeit zu einer Verkürzung gegenüber dem bei der aktuellen Regelung vorliegenden Wert, so heißt das, daß die Vorkat-Lambdasonde defekt sein muß, da der Trimmregler durch Eingriff in die Lambda-Regelung die P-Sprung-Verzögerungszeit bereits auf einen maximal zulässigen Wert vergrößert hat, der so groß ist, daß sich die Sollwert-Fläche nicht mehr darstellen läßt.

In Schritt S4 wird die Fläche bestimmt, die die Schwingung des Sondensignals der Nachkat-Lambdasonde einschließt. Die Art der Bestimmung wird nachstehend noch näher erläutert werden.

In Schritt S5 wird abgefragt, ob diese Fläche unter einem Grenzwert bleibt. Ist dies der Fall, wird in Schritt S6 die Abgasreinigungsanlage als funktionsfähig diagnostiziert. Ist dies nicht der Fall ("-"-Verzweigung) wird mit Schritt S7 fortgefahren. Die Abgasreinigungsanlage ist in diesem Fall fehlerhaft.

Um den Fehler der Abgasreinigungsanlage noch genauer qualifizieren zu können, wird in Schritt S7 abgefragt, ob die Vorkat-Lambdasondenmarkierung gesetzt wurde. Ist dies der Fall ("+"-Verzweigung) wird in Schritt S7 nur die Vorkat-Lambdasonde als defekt diagnostiziert. Ist dies nicht der Fall ("-"-Verzweigung) wird in Schritt S9 nur ein Katalysatorversagen diagnostiziert.

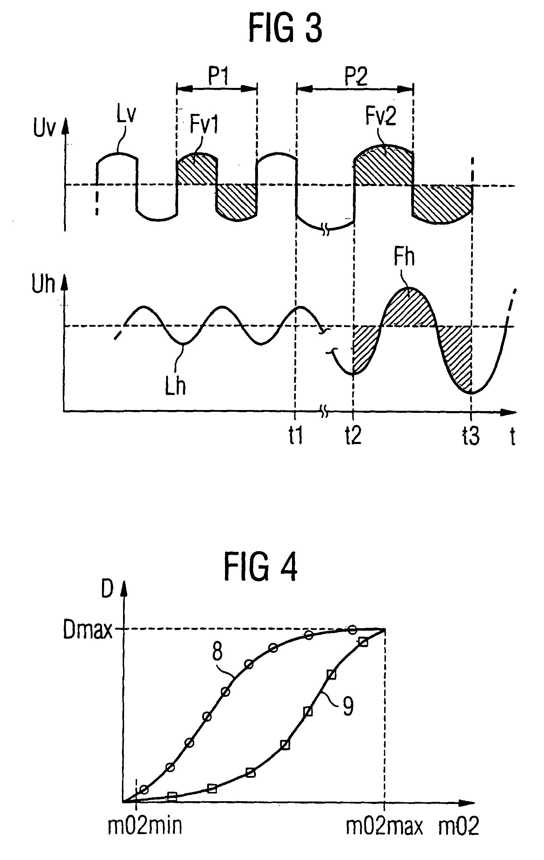

Das Diagnoseverfahren setzt in Schritt S1 den Katalysator 6 einer bestimmten Belastung aus, die größer ist als die normale Betriebsbelastung. Dies wird aus den Zeitreihen der Fig. 3 besonders gut verständlich.

In Fig. 3 ist in der oberen Zeitreihe die Sondenspannung Uv der Vorkat-Lambdasonde 5 aufgetragen. Das Sondensignal Lv vollführt eine periodische Schwingung um einen Mittelwert. Das Signal Lv entspricht in diesem Fall einer voll funktionsfähigen Vorkat-Lambdasonde 5, da die Schwingung vollständig symmetrisch ist. Ein Eingriff der Trimmregelung war bislang nicht erforderlich, die gestrichelte Linie entspricht genau dem stöchiometrischen Gemisch. Die vom Sondensignal Lv eingeschlossene Fläche Fv1 stellt die wechselnde Sauerstoffbeladung des Katalysators 6 dar. Über der gestrichelten Linie liegende Flächenanteile entsprechen einem Sauerstoffaustrag bei der Versorgung mit fettem Gemisch, unter der gestrichelten Linie liegende Flächenanteile stellen ein Sauerstoffeintrag bei magerem Gemisch dar. Die Schwingung des Sondensignals Lv erfolgt mit einer gewissen Periode P1, wobei im dargestellten Fall die Schwingung symmetrisch ist. Läge eine gealterte Vorkat-Lambdasonde 5 vor, wären die zwei Flächenanteile der Fläche Fv1 nicht gleich groß, da durch Eingriff der Trimmregelung eine der beiden Halbperioden länger, die .andere kürzer wäre. Im dargestellten Fall ist jedoch T1/2 genau die Hälfte von P1.

In der unteren Zeitreihe ist die Sondenspannung Uh der Nachkat-Lambdasonde 7 aufgetragen. Das Sondensignal Lh vollführt ebenfalls eine Schwingung um den stöchiometrischem Gemisch entsprechenden Wert. Diese Schwingung ist aufgrund der sauerstoffspeichernden und katalytischen Wirkung des Katalysators 6 sehr viel kleiner, d.h. die Schwingung schließt eine sehr viel geringere Fläche ein. In der Fig. 3 ist zur besseren Übersichtlichkeit die Schwingung vergrößert dargestellt. Das Sondensignal Lh schwingt in weitgehend fester Phasenbeziehung zum Sondensignal Lv, da ja letztlich die Oszillation des Kraftstoff-Luftverhältnisses ausschlaggebend für beide Schwingungen ist. Jedoch ist das Sondensignal Lh gegenüber dem Sondensignal Lv zeitlich verschoben, da von der Lage der Vorkat-Lambdasonde 5 zum Ort der Nachkat-Lambdasonde 7 eine gewisse Laufzeit für das im Abgastrakt 4 strömende Gas erforderlich ist.

Wird in Schritt S1 die Fläche Fv1, die das Signal Lv einschließt, vergrößert, indem die P-Sprung-Verzögerungszeit vergrößert wird, schwingt das Sondensignal Lv mit einer längeren Periode P2. Die dabei von dem Sondensignal Lv eingeschlossene Fläche Fv2 stellt nach der oben angeführten Gleichung eine vergrößerte Beladung bzw. Belastung des Katalysators 6 dar. Der Unterschied zwischen den Flächen Fv1 und Fv2 ist zur Diagnose des Katalysators 6 auf die Einhaltung bestimmter Emissionsgrenzwerte hin nötig. Wie die Fläche Fv2 zu wählen ist, wird später noch erläutert werden. In Fig. 3 ist die Veränderung der Fläche Fv1 zur Fläche Fv2 zum Zeitpunkt t1 vorgenommen.

Mit einer gewissen Zeitverzögerung zeigt auch das Sondensignal Lh der Nachkat-Lambdasonde 7 die längere Periode P2 wie das Sondensignal Lv sowie einen größeren Schwingungshub. Zur Vereinfachung ist in Fig. 3 die Zeitverzögerung durch eine Unterbrechung der Zeitachse angedeutet. Natürlich hängt diese Zeitverzögerung von der Gaslaufzeit zwischen der Vorkat-Lambdasonde 5 und der Nachkat-Lambdasonde 7 ab, welche wiederum drehzahlabhängig ist. Es wird deshalb eine gewisse Zeitdauer gewartet, bis das Sondensignal Lh der Nachkat-Lambdasonde 7 ausgewertet wird, nachdem die Fläche Fv2 am Sondensignal Lv der Vorkat-Lambdasonde 5 eingestellt wurde. Diese Zeitdauer ist drehzahlabhängig und berücksichtigt die erwähnte Gaslaufzeit. Dann wird periodensynchron zur Schwingung des Sondensignals Lv die Fläche Fh bestimmt, die die Schwingung des Sondensignals Lh der Nachkat-Lambdasonde 7 einschließt.

Diese Fläche Fh kann man dadurch bestimmen, indem das Sondensignal Lh einer starken Tiefpaßfilterung oder zeitlichen Mittelung unterworfen wird, um den Mittelwert des Sondensignals Lh zu ermitteln, der in Fig. 3 als gestrichelte Linie dargestellt ist. Nun wird zu jedem Zeitpunkt ab dem Zeitpunkt t2, zu dem ein Nulldurchgang des Sondensignals Lv festgestellt wurde, die Betragsdifferenz zwischen dem Mittelwert und der aktuellen Sondenspannung Uh bestimmt und aufintegriert. Diese Integration, die auch durch eine Summation ersetzt werden kann, geschieht bis zum Zeitpunkt t3, zu dem der übernächste Nulldurchgang des Sondensignals Lv der Vorkat-Lambdasonde 5 nach dem Zeitpunkt t2 ermittelt wurde. Dann ist eine Periode P2 abgeschlossen. Das Sondensignal Lh der Nachkat-Lambdasonde 7 wird also periodensynchron zum Sondensignal Lv der Vorkat-Lambdasonde 5 ausgewertet.

Die so bestimmte Fläche Fh wird dann dem Schwellwertvergleich des Schrittes S5 der Fig. 2 unterzogen. Aus der Fläche Fh kann man eine Sauerstoffmenge als Diagnosewert D berechnen.

Die Fläche Fv2 entspricht einer Sauerstoffmenge mO2. In Fig. 4 ist dargestellt, wie der Diagnosewert D, der mit der Fläche Fh verknüpft ist, mit der Sauerstoffmenge mO2 zusammenhängt, die durch Vergrößern der Fläche Fv1 zur Fläche Fv2 vorgegeben ist. Fig. 4 zeigt den Diagnosewert D als Funktion der Sauerstoffmenge. Dabei stellt Kurve 9 einen neuwertigen Katalysator 6, Kurve 8 einen Grenz-Katalysator dar, der maximal zulässig verschlechtert ist. Jede weitere Verschlechterung dieses Grenzkatalysators würde zu einer Überschreitung zulässiger Emissionsgrenzwerte führen.

Die Kurven 8 und 9 der Fig. 4 schließen eine bekannte Hysterese ein. Der Diagnosewert nähert sich dabei an ein Maximum Dmax an, das dann erreicht wird, wenn die maximale Sauerstoffspeichermenge mO2max erreicht wird. Diese maximale Sauerstoffmenge mO2max ist die Menge, die der Katalysator 6 bestenfalls, d.h. im neuwertigen Zustand, aufnehmen kann. Wird darüberhinaus Sauerstoff eingebracht, schlägt dieser vollständig am Ausgang des Katalysators 6 durch. Eine Beladung über diesen Wert mO2max hinaus ist deshalb in keinem Falle sinnvoll. Somit ist eine natürliche Obergrenze für die durch Variation der Fläche Fv1 einzustellende Sauerstoffmenge mO2 gegeben. Eine Untergrenze ergibt sich in der im normalen Betrieb auftretenden Beladung, die durch mO2min in Fig. 4 bezeichnet ist.

Die zur Diagnose einzustellende Sauerstoffmenge mO2 und mithin die einzustellende Sollwert-Fläche für Fv2 ergibt sich aus mehreren Kriterien. Zum einen sollte der Diagnoseabstand zwischen dem neuwertigen Katalysator 6, wie er durch Kurve 9 repräsentiert ist, und dem Grenz-Katalysator, der sich in Kurve 8 widerspiegelt, maximal sein. Dies ist der Bereich der Hysteresekurve, in dem für eine gegebene Sauerstoffmenge mO2 der maximale Unterschied am Diagnosewert D vorliegt. Zum anderen sollte die einzustellende Sauerstoffmenge mO2 möglichst nahe am normalen Betriebswert, z.B. an mO2min liegen. Dann ist nämlich sichergestellt, daß zusätzliche Emissionen durch die Diagnose weitestgehend vermieden sind. Da die Kurven 8 und 9 in Fig. 4 natürlich idealisiert gezeichnet sind, und sich realiter eine gewisse Streuung einstellen wird, wird man also unter einer Abwägung des Diagnoseabstandes für den Diagnosewert D und der größtmöglichen Nähe zur Sauerstoffmenge mO2min, die im normalen Betrieb vorliegt, abwägen. Dabei ist auch zu berücksichtigen, daß der Abstand auf der Skala des Diagnosewertes D direkt verknüpft ist mit dem durch die Diagnose diagnostizierbaren Emissionsgrenzwert, der von der Abgasreinigungsanlage eingehalten wird. Je größer der Abstand auf der Skala des Diagnosewertes D, desto kleinere Emissionsgrenzwertverschlechterungen der Abgasreinigungsanlage sind diagnostizierbar. Das Verfahren erlaubt es also die Sauerstoffmenge mO2, mit der der Katalysator zur Diagnose belastet wird, am Diagnosewert D, also an der einzuhaltenden Qualität der Abgasreinigunganlage, auszurichten. Die Belastung des Katalysators, die immer zu einer Mehremission führt, wird also so gering wie möglich gehalten.

## Patentansprüche

1. Verfahren zur Diagnose einer Abgasreinigungsanlage im Abgastrakt einer lambdageregelten Brennkraftmaschine (1) mit einem 3-Wege-Katalysator (6), einer dem Katalysator (6) vorgeschalteten Vorkat-Lambdasonde (5) und einer dem Katalysator (6) nachgeschalteten Nachkat-Lambdasonde (7), bei welchem Verfahren

   - die Brennkraftmaschine (1) in der Lambdaregelung so betrieben wird, dass das Kraftstoff-Luftverhältnis des der Brennkraftmaschine (1) zugeführten Gemisches und damit das Signal der Vorkat-Lambdasonde (5) eine bestimmte, periodische Schwingung um Lambda = 1 herum ausführt, wobei das Signal der Nachkat-Lambdasonde (7) ebenfalls eine Schwingung ausführt,
- zur Diagnose die Schwingung des Kraftstoff-Luftverhältnisses und damit des Signals der Vorkat-Lambdasonde (5) durch Beeinflussung der Lambdaregelung auf eine bestimmte, periodisch mit der Schwingung wechselnde Beladung des Katalysators (6) eingestellt wird, die über der normalen Betriebsbeladung liegt, und,
- ein Defekt der Abgasreinigungsanlage diagnostiziert wird, wenn das Schwingungsverhalten des Signals der Nachkat-Lambdasonde (7) außerhalb eines Sollbereiches liegt, wobei
- die von der Schwingung des Signals der Vorkat-Lambdasonde (5) eingeschlossene Fläche bestimmt wird,
- die Lambdaregelung so beeinflußt wird, dass diese Fläche einen Sollwert einnimmt oder überschreitet,
- die von der Schwingung des Signals der Nachkat-Lambdasonde (7) eingeschlossene Fläche bestimmt wird und
- ein Defekt der Abgasreinigungslage diagnostiziert wird, wenn diese Fläche oder die Summe einen Schwellwert überschreitet,

**dadurch gekennzeichnet, dass** die Vorkat-Lambdasonde (5) eine binäre Lambdasonde ist und dass die von der Schwingung des Signals der Vorkat-Lambdasonde (5) eingeschlossene Fläche beeinflusst wird, indem ein Proportionalanteil der Lambda-Regelung verändert wird.

2. Verfahren nach Anspruch 1,
**dadurch gekennzeichnet, dass** die P-Sprung-Verzögerungszeit für einen Sprung von fett nach mager und für einen Sprung von mager nach fett gleich verändert wird.

3. Verfahren nach einem der Ansprüche 1 und 2,
**dadurch gekennzeichnet, dass**, wenn eine Beeinflussung des Proportionalanteils über eine gewisse Grenze hinaus nötig ist, um die Fläche zu beeinflussen, ein Defekt der Vorkat-Lambdasonde (5) diagnostiziert wird.

4. Verfahren nach einem der Ansprüche 1 mit 3,
**dadurch gekennzeichnet, dass** als Defekt der Abgasreinigungsanlage ein Katalysatorversagen diagnostiziert wird, wenn die Beeinflussung des Proportionalanteils zur Beeinflussung der Fläche unter einer gewissen Grenze bleibt.

5. Verfahren nach Anspruch 1,
**dadurch gekennzeichnet, dass** aus der von der Schwingung des Signals der Nachkat-Lambdasonde (7) eingeschlossenen Fläche ein die Sauerstoffspeicherfähigkeit des Katalysators (6) kennzeichnender Wert gewonnen wird.

6. Verfahren nach einem der vorhergehenden Ansprüche,
**dadurch gekennzeichnet, dass** die Diagnose ausgesetzt wird, wenn die Lambda-Regelung eine gewisse Regelabweichung überschreitet.

7. Verfahren nach einem der vorhergehenden Ansprüche,
**dadurch gekennzeichnet, dass** die von der Schwingung eines Signals eingeschlossene Fläche bestimmt wird, indem der Betrag der Abweichung vom Mittelwert der Schwingung über eine Periode der Schwingung der Vorkat-Lambdasonde (5) integriert oder summiert wird

8. Verfahren nach Anspruch 1,
**dadurch gekennzeichnet, dass** ein defekter Katalysator (6) diagnostiziert wird, wenn in der Diagnose die Amplitude der Schwingung des Signals der Nachkat-Lambdasonde (7) einen Schwellwert überschreitet.

**Claims**

1. A method for diagnosing an exhaust gas cleaning system in the exhaust section of a lambda-controlled internal combustion engine (1) having a 3-way catalytic converter (6), a pre-catalyst lambda sensor (5) connected upstream of the catalytic converter (6), and a post-catalyst lambda sensor (7) connected downstream of the catalytic converter (6), in which method

- the internal combustion engine (1) is operated in such a way during lambda control that the fuel/air ratio of the mixture supplied to the internal combustion engine (1) and therefore the signal from the pre-catalyst lambda sensor (5) executes a defined, periodic oscillation about lambda = 1, the signal from the post-catalyst lambda sensor (7) likewise executing an oscillation,
- for diagnosis, the oscillation of the fuel/air ratio and therefore of the signal from the pre-catalyst lambda sensor (5) is set, by influencing the lambda control, to a defined loading of the catalytic converter (6), which changes periodically with the oscillation and is above the normal operating loading, and
- a defect in the exhaust gas cleaning system is diagnosed if the oscillation characteristic of the signal from the post-catalyst lambda sensor (7) lies outside a desired range, wherein
- the area which is included by the oscillation of the signal from the pre-catalyst lambda sensor (5) is determined,
- the lambda control is influenced in such a way that this area adopts or exceeds a desired value,

- the area included by the oscillation of the signal from the post-catalyst lambda sensor (7) is determined, and
- a defect in the exhaust gas cleaning system is diagnosed if this area or the sum exceeds a threshold value, **characterized in that** the pre-catalyst lamba sensor (5) is a binary lambda sensor and **in that** the area which is included by the oscillation of the signal from the pre-catalyst lambda sensor (5) is influenced by altering a proportional component of the lambda control.

2. Method according to Claim 1, **characterized in that** the P-jump delay time is changed in the same way for a jump from rich to lean and for a jump from lean to rich.

3. Method according to one of Claims 1 and 2, **characterized in that**, if it is necessary to influence the proportional component beyond a certain limit in order to influence the area, a defect in the pre-catalyst lambda sensor (5) is diagnosed.

4. Method according to one of Claims 1 to 3, **characterized in that** a catalytic converter failure is diagnosed as the defect in the exhaust gas cleaning system if the influencing of the proportional component in order to influence the area remains below a certain limit.

5. Method according to Claim 1, **characterized in that** a value which is characteristic of the oxygen storage capacity of the catalytic converter (6) is obtained from the area included by the oscillation of the signal from the post-catalyst lambda sensor (7).

6. Method according to one of the preceding claims, **characterized in that** the diagnosis is discontinued when the lambda control exceeds a certain control deviation.

7. Method according to one of the preceding claims, **characterized in that** the area included by the oscillation of a signal is determined by the amount of deviation from the mean of the oscillation over one period of the oscillation of the pre-catalyst lambda sensor (5) being integrated or summed.

8. Method according to Claim 1, **characterized in that** a defective catalytic converter (6) is diagnosed if the amplitude of the oscillation of the signal from the post-catalyst lamba sensor (7) exceeds a threshold value in the diagnosis.

## Revendications

1. Procédé pour le diagnostic d'une installation d'épuration des gaz d'échappement contenue dans la conduite de gaz d'échappement d'un moteur à combustion interne à régulation lambda (1), comprenant un catalyseur à 3 voies (6), une sonde lambda avant catalyseur (5) placée en amont du catalyseur (6) et une sonde lambda après catalyseur (7) placée en aval du catalyseur (6), dans lequel procédé

- on fait travailler le moteur à combustion interne (1) dans la régulation lambda de telle manière que le rapport carburant-air du mélange amené au moteur à combustion interne (1) et, de ce fait, le signal de la sonde lambda avant catalyseur (5) décrivent une oscillation périodique déterminée de part et d'autre de lambda = 1, le signal de la sonde lambda après catalyseur (7) décrivant de même une oscillation,
- pour le diagnostic, on règle l'oscillation du rapport carburant-air et, de ce fait, du signal de la sonde lambda avant catalyseur (5) par une action sur la régulation lambda sur une charge du catalyseur (6) déterminée, qui varie périodiquement avec l'oscillation, et qui se trouve au-dessus de la charge de fonctionnement normale, et
- un défaut de l'installation d'épuration des gaz d'échappement est diagnostiqué lorsque le comportement de l'oscillation du signal de la sonde lambda après catalyseur (7) se trouve en dehors d'une plage de consigne, cependant que
- la surface enfermée par l'oscillation du signal de la sonde lambda avant catalyseur (5) est déterminée,
- la régulation lambda est influencée de manière que cette surface prenne une valeur de consigne ou la dépasse,
- la surface enfermée par l'oscillation du signal de la sonde lambda après catalyseur (7) est déterminée et
- un défaut de l'installation d'épuration des gaz d'échappement est diagnostiqué lorsque cette surface ou la somme dépasse une valeur de seuil,

**caractérisé en ce que** la sonde lambda avant catalyseur (5) est une sonde lambda binaire et **en ce que** la surface enfermée par l'oscillation du signal de la sonde lambda avant catalyseur (5) est influencée par une modification de la partie proportionnelle de la régulation lambda.

2. Procédé selon la revendication 1, **caractérisé en ce que** le temps de retardement du saut P est modifié de la même façon pour un saut du riche au pauvre et pour un saut du pauvre au riche.

3. Procédé selon une des revendications 1 et 2, **caractérisé en ce que**, lorsqu'une action sur la partie proportionnelle au-delà d'une certaine limite est nécessaire pour agir sur la surface, on diagnostique un défaut de la sonde lambda avant catalyseur (5).

4. Procédé selon une des revendications 1 et 3, **caractérisé en ce que**, comme défaut de l'installation d'épuration des gaz d'échappement, on diagnostique une défaillance du catalyseur lorsque l'action sur la partie proportionnelle en vue d'agir sur la surface reste au-dessous d'une certaine limite.

5. Procédé selon la revendication 1, **caractérisé en ce que**, de la surface enfermée par l'oscillation du signal de la sonde lambda après catalyseur (7), on tire une valeur qui **caractérise** la capacité d'accumulation de l'oxygène du catalyseur (6).

6. Procédé selon une des revendications précédentes, **caractérisé en ce que** le diagnostic est suspendu lorsque la régulation lambda dépasse un certain écart de régulation.

7. Procédé selon une des revendications précédentes, **caractérisé en ce que** la surface enfermée par l'oscillation d'un signal est déterminée par intégration ou sommation de la valeur absolue de l'écart par rapport à la valeur moyenne de l'oscillation sur une période de l'oscillation de la sonde lambda avant catalyseur (5).

8. Procédé selon la revendication 1, **caractérisé en ce que** un catalyseur (6) défectueux est diagnostiqué lorsque, dans le diagnostic, l'amplitude de l'oscillation du signal de la sonde lambda après catalyseur (7) devient supérieure à une valeur de seuil.

# FIG 1

# FIG 2

# FIG 3

# FIG 4